# EUROPÄISCHE PATENTSCHRIFT

(11) **EP 0 521 418 B1**
(45) Veröffentlichungstag und Bekanntmachung des Hinweises auf die Patenterteilung: **03.01.1996**
(21) Anmeldenummer: 92110894.0
(22) Anmeldetag: 26.06.1992
(51) Int. Cl.: B29B 17/02, B01D 11/02, B29K 23/00

(54) **Verfahren zur Aufbereitung von gebrauchten Gegenständen aus Polyolefin zu wiederverwendbarem Rohstoff**
Method for pretreatment of old polyolefinic objects, to be used as recycled raw material
Procédé pour la préparation d'objets usagés en polyoléfines, comme matière première recyclable

(30) Priorität: 05.07.1991 DE 4122277
(43) Veröffentlichungstag der Anmeldung: 07.01.1993
(73) Patentinhaber: Nordenia Verpackungswerke GmbH, D-49439 Steinfeld (DE)
(72) Erfinder: Lorenz, Arnulf Dipl.-Chem., 8028 Dresden (DE); Walser, Hans Peter Dipl.-Ing., 2841 Lohne (DE)
(74) Vertreter: Jabbusch, Wolfgang, Dr.Jur. Jabbusch, Wehser & Lauerwald Patentanwälte

(56) Entgegenhaltungen:
- EP-A- 0 359 106
- GB-A- 2 155 937
- US-A- 4 173 493

## Beschreibung

Die Erfindung betrifft ein Verfahren zur Aufbereitung von gebrauchten Gegenständen aus Polyolefin zu wiederverwendbarem Rohstoff, insbesondere zur Aufbereitung von gebrauchten Verpackungsfolien aus Polyethylen, wie Schrumpffolien, Säcken und dergleichen.

Polyethylen ist ein Polyolefin, das in großen Mengen zur Herstellung von Folien für Verpackungszwecke verarbeitet wird. Aus den Folien werden z.B. Schrumpfhauben, Säcke und dergleichen hergestellt.

Polyethylen, als ein thermoplastischer Kunststoff, ist aufgrund seines strukturellen Molekülaufbaus wiederholt aufschmelzbar und verformbar. Es ist für eine mehrmalige Wiederverwendung geeignet. Einer Wiederverarbeitung zu hochwertigen Recyclingprodukten, vorzugsweise PE-Folien mit definierten Eigenschaften, steht jedoch entgegen, daß die gebrauchten Gegenstände, insbesondere Folien, bei ihrer Herstellung anwendungsorientiert mit Zuschlagstoffen, wie Antistatika, Gleitmittel, Thermo- oder UV-Stabilisatoren ausgerüstet werden, die dann im daraus hergestellten Recyclingprodukt in unbekannten Mengen und Kombinationen vorliegen. Eine Sortierung der gebrauchten Gegenstände nach Inhaltstoffen ist technisch und wirtschaftlich nicht möglich.

Recyclingprodukte, insbesondere Folien, die mit diesen Inhaltstoffen belastet sind, führen bei ihrer Weiterverarbeitung zu Problemen, beispielsweise beim Kleben, Schweißen oder Bedrucken. Vielfach lösen sich Verbindungsnähte nach anfänglich guten Eigenschaften erst beim Anwender auf.

Darüber hinaus enthalten die gebrauchten Folien Abbaustoffe, wie unpolare PE-Wachse. Diese entstehen während der Lebensdauer im Zuge von Verarbeitungsprozessen sowie durch Wärme-, Licht- und Wettereinwirkung. Diese bewirken zum Teil eine erhebliche Minderung der Gebrauchseigenschaften des Recyclingproduktes, der Folie.

Letztlich sind die gebrauchten Folien, besonders Verpackungsfolien, mehr oder minder stark bedruckt. Diese Druckfarben führen bei der Extrusion von aufbereiteten Materialien zu PE-Folien mit einer starken undefinierbaren Verfärbung, so daß daraus nur dunkel überfärbte Müllsäcke hergestellt werden können.

Um aus gebrauchten Polyethylenfolien wieder hochwertige Folien herstellen zu können, bedarf es somit einer Entfernung der Folienzuschlagstoffe, der unpolaren PE-Wachse sowie der anhaftenden Druckfarben aus den gebrauchten Folien.

Der Erfindung liegt die Aufgabe zugrunde, ein Verfahren zu finden, mit welchem sich gebrauchte Gegenstände, vorzugsweise Folien, zu wiederverwertbarem, hochwertigen Rohstoff aufbereiten lassen.

Diese Aufgabe ist erfindungsgemäß mit einem Verfahren nach Anspruch 1 gelöst.

Das Zerschnitzeln der Folienabfälle kann in üblichen Schnitzelwerken erfolgen. Während des Waschens der Schnitzel in einem organischen Lösungsmittel werden die Inhaltstoffe aus den Schnitzeln extrahiert, d.h. die Inhaltstoffe und Abbaustoffe werden herausgelöst und reichern sich im Lösungsmittel an, ohne daß eine Auflösung des Kunststoffes erfolgt. Während der Verweilzeit im Lösungsmittelbad werden die Schnitzel intensiv bewegt, z.B. mechanisch durchgerührt und/oder durch erzeugte Turbulenzen, z.B. Längs- und Querströmungen in der Flüssigkeit, verwirbelt. Dabei reiben die Schnitzel aneinander, und durch die hohe Friktion erfolgt eine Entfernung anhaftender Druckfarben. Die abgeriebenen Druckfarben werden vom Lösungsmittelbad aufgenommen. Die Kombination von Extraktion im Lösungsmittelbad und gleichzeitiger intensiver Bewegung durch z.B. mechanisches Rühren führt somit zur Entfernung der anhaftenden Druckfarben sowie Herauslösung bzw. Extraktion der Inhaltstoffe und Abbaustoffe aus den Folienab. Nach einer vorbestimmten Verweildauer im Lösungsmittelbad, während der ständig bewegt wird, können die somit in vorteilhafter Weise in mehr oder weniger einem Arbeitsgang aufbereiteten Schnitzel, eingeschmolzen, zu Granulat oder Agglomerat geformt und einer Wiederverwertung bei der Herstellung hochwertiger Polyethylenprodukte zugeführt werden.

Da gebrauchte Verpackungsfolien auch Schmutzreste sowie Reste der einmal darin verpackt gewesenen Waren aufweisen können, werden die Schnitzel vor der Eingabe in ein Lösungsmittelbad in Wasser gewaschen. Anschließend können die Schnitzel in einer geeigneten Vorrichtung, beispielsweise einer Siebzentrifuge, getrocknet werden, in der das anhaftende Wasser abgeschleudert wird. Die derart gewaschenen und getrockneten Schnitzel können anschließend portionsweise der Behandlung im Lösungsmittelbad unterzogen werden.

Die Aggressivität, und damit die Extraktionswirkung des Lösungsmittels, wird dadurch erhöht, daß es im Lösungsmittelbad auf einer seiner Siedetemperatur entsprechenden Temperatur gehalten wird. Die Verweildauer der zerschnitzelten Folienabfälle im Lösungsmittelbad läßt sich dadurch verringern. Darüber hinaus werden bestimmte Inhaltstoffe, die nur unter Einwirkung von Wärme in entsprechenden Lösungsmitteln lösbar sind, extrahiert.

Zweckmäßigerweise wird ein Lösungsmittel verwendet, dessen Siedetemperatur wesentlich unter der Erweichungstemperatur von Polyethylen liegt. Bei Verwendung eines solchen Lösungsmittels wird verhindert, daß die Polyethylenschnitzel während der Aufbereitung stark erweichen bzw. an- oder aufschmelzen und miteinander verkleben. Gleichzeitig wird verhindert, daß Druckfarbenteilchen irreversibel in die Polyethylenschnitzel eingebettet werden, was zur Einfärbung des Recyclingproduktes führen könnte, so daß letztendlich das erfindungsgemäße Verfahren nicht mehr zum Ziel führt.

Darüber hinaus wird mit Vorteil ein Lösungsmittel verwendet, dessen Dichte niedriger ist, als die Dichte der aufzubereitenden Schnitzel. Damit wird vermieden, daß die Polyethylenschnitzel aufschwimmen. Die Schnitzel sinken aufgrund ihres höheren spezifischen Gewichtes nach unten und sind dadurch der gegenseitigen Friktion zur Abreibung der anhaftenden Druckfarben, intensiver ausgesetzt.

Desweiteren wird an das Lösungsmittel die Bedingung gestellt, daß es thermisch und chemisch stabil ist und somit über eine lange Betriebsdauer wiederholt verwendet werden kann, sowie sich gegenüber dem Polyethylen chemisch indifferent verhält, also keine Reaktion mit dem Kunststoff zeigt.

Lösungsmittel dieser Art, die zur Verwendung im erfindungsgemäßen Verfahren besonders geeignet sind, sind vorzugsweise niedrig siedende Essigsäureester, wie Methyl-, Ethyl- und Isopropylacetat oder auch Alkohole wie Ethylalkohol. Dabei haben die Ester gegenüber Ethylalkohol nur hinsichtlich des Extraktionsvermögens von Folieninhaltstoffen Vorteile.

Bei dem erfindungsgemäßen Verfahren ist es besonders vorteilhaft, wenn die Verweildauer der Schnitzel in Lösungsmittelbädern dem Zeitpunkt eines Lösungsmittelaustausches gleichgesetzt wird, wobei der Lösungsmittelaustausch am Ende der Verweildauer der Schnitzel in einem ersten Bad nach etwa 30 Minuten, im zweiten Bad nach etwa 30 Minuten und in einem dritten Bad nach etwa 30 bis 60 Minuten erfolgt.

Die beim Kochen der Lösungsmittel in den Lösungsmittelbädern freigesetzten Lösungsmitteldämpfe werden zweckmäßigerweise aufgefangen, kondensiert und das Lösungsmittelkondensat einer Wiederverwendung in den Lösungsmittelbädern zugeführt.

Bei einer praktischen Ausführung des erfindungsgemäßen Verfahrens werden die Schnitzel in Wasser gewaschen, die gewaschenen Schnitzel getrocknet, insbesondere durch Zentrifugieren, und eine vorbestimmte Menge der getrockneten Schnitzel in ein erstes, kochendes Lösungsmittel enthaltendes Lösungsmittelbad gegeben. Darin wird etwa 30 Minuten lang intensiv mechanisch durchgerührt, und danach werden die Schnitzel aus dem ersten Lösungsmittelbad herausgenommen und in ein zweites Lösungsmittelbad gegeben und erneut gekocht und 30 Minuten durchgerührt. Die Schnitzel bilden zusammen mit dem Lösungsmittel eine pumpfähige Masse, die von einem Lösungsmittelbad in ein nachfolgendes Bad gepumpt werden kann. Während des Pumpvorganges kann gleichzeitig ein zumindest teilweiser Lösungsmittelaustausch in den Lösungsmittelbädern erfolgen, beispielsweise dadurch, daß dem Lösungsmittelbad, aus dem die Schnitzel zusammen mit einem Teil des gebrauchten Lösungsmittels abgepumpt werden, frisches Lösungsmittel zugesetzt wird. Nachdem die Schnitzel in einem zweiten Lösungsmittelbad wieder 30 Minuten gekocht und intensiv durchgerührt wurden, werden sie in ein drittes Lösungsmittelbad gegeben und wieder 30 Minuten bis etwa 60 Minuten gekocht und durchgerührt. Danach können die Schnitzel dem dritten Lösungsmittelbad entnommen werden und anschließend, insbesondere durch Auspressen, vom Lösungsmittel separiert werden. Die dabei abgetropften Schnitzel werden dann unter Abdampfung noch anhaftender Lösungsmittelreste getrocknet und können anschließend eingeschmolzen und einer Wiederverwertung zugeführt werden.

Verbrauchte Lösungsmittel sind mit herausgelösten Inhaltstoffen, Abbaustoffen sowie mit aus Druckfarben-Resten gebildeten Feststoffen beladen. Durch Filtrieren und Destillieren der verbrauchten Lösungsmittel können die darin in gelöster und ungelöster Form enthaltenen Folienzuschlagstoffe, PE-Wachse sowie Druckfarben in einer anfallenden Größenordnung von ca. 1-5 Gew. % als Rückstand ausgesondert und anschließend entsorgt werden.

Der geschlossene Lösungsmittelkreislauf reduziert den Lösungsmittelverbrauch auf das technisch realisierbare Minimum. Das erfindungsgemäße Verfahren hat schließlich auch noch den Vorteil, daß das gewonnene Recyclingprodukt auch von gesundheitsrelevanten Stoffen und Keimen befreit ist, mit denen das gebrauchte Ausgangsprodukt unter Umständen kontaminiert war. Anspruch 14 betrifft eine

Vorrichtung zur Durchführung des erfindungsgemäßen Verfahrens.

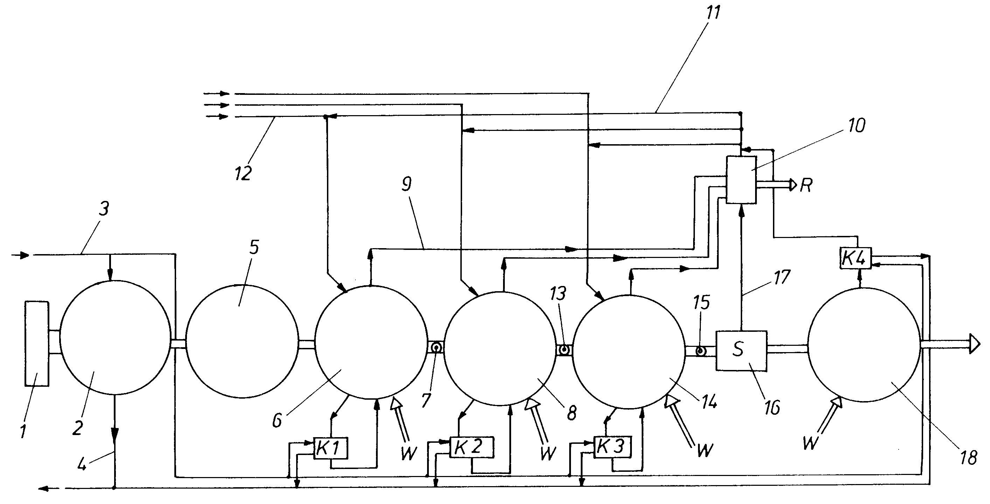

Ein Ausführungsbeispiel, aus dem sich weitere erfinderische Merkmale ergeben, ist in der Zeichnung schematisch dargestellt.

Die Zeichnung zeigt ein Verfahrensschaltbild zur Verdeutlichung des Ablaufes des erfindungsgemäßen Verfahrens.

Einem schematisch angedeuteten Schnitzelwerk 1 werden gebrauchte Folien zugeführt und zu Schnitzeln zerkleinert. Die Schnitzel werden in eine Schnitzelwaschstation 2 gegeben und dort mit zugeführtem Wasser gewaschen. Das Brauchwasser wird über die Brauchwasserleitung 3 zugeführt und über die Leitung 4 wieder abgeführt. Die gewaschenen Schnitzel werden aus der Waschstation entnommen und in eine Siebzentrifuge 5 gegeben, in der eine Abtrocknung erfolgt. Die getrockneten Schnitzel werden anschließend in ein erstes Lösungsmittelbad 6 überführt, dem Prozeßwärme W zugeführt wird, um das darin enthaltene Lösungsmittel, z.B. Ethylacetat, auf dem Siedepunkt von ca. 78°C zu halten. In dem ersten Lösungsmittelbad 6 ist ein Rührwerk installiert, welches in der Lage ist, die eingegebenen Schnitzel in dem Lösungsmittelbad intensiv durchzurühren. Freigesetzte Lösungsmitteldämpfe können dem Kondensator 1 zugeführt werden, von dem aus das kondensierte Lösungsmittel in flüssiger Form wieder dem Lösungsmittelbad 6 zuführbar ist. Der Kondensator K1 wird mit Kühlwasser betrieben, das von der Brauchwasserleitung 3 abgezweigt wird. Nach einer bestimmten Verweilzeit der Schnitzel im ersten Lösungsmittelbad 6, z.B. 30 Minuten, wird ein Brei aus Schnitzeln und Lösungsmittel mittels der Pumpe 7 in das zweite Lösungsmittelbad 8 überführt. Gleichzeitig wird das im Lösungsmittelbad 6 befindliche, bereits mit Extrakten und aufgrund der Rührwirkung abgeriebenen Druckfarben beladende Lösungsmittel wenigstens zum Teil über die Leitung 9 dem Destillator 10 zugeführt, in welchem die Feststoffe aus dem Lösungsmittel separiert werden und das regenerierte Lösungsmittel wieder über eine Leitung 11 zum ersten Lösungsmittelbad 6 zurückführbar ist, wobei gegebenenfalls über die Zuleitung 12 frisches Lösungsmittel aus einem entsprechenden, hier nicht dargestellten Vorratstank zugefügt wird. Im zweiten Lösungsmittelbad 8 ist ebenfalls ein nicht weiter dargestelltes Rührwerk installiert, welches die eingegebenen Schnitzel intensiv durchrührt. Es wird ebenfalls Prozeßwärme W zugeführt, um den Extraktions- und Farbablösevorgang fortzusetzen. Das zweite Lösungsmittelbad 8 ist ebenfalls mit dem Kondensator K2 ausgerüstet, sowie über entsprechende Leitungen mit dem Destillator 10 gekoppelt, der verbrauchtes Lösungsmittel regenerieren kann und die ausgefällten Rückstände R freisetzt, damit diese einer Entsorgung zugeführt werden können.

Mit der Pumpe 13 kann nach einer bestimmten Verweilzeit, z.B. 30 Minuten, ein Brei aus Schnitzeln und Lösungsmittel aus dem zweiten Lösungsmittelbad 8 in ein drittes Lösungsmittelbad 14 überführt werden, dem ebenfalls Prozeßwärme W zugeführt wird und das mit dem Kondensator K3 ausgerüstet ist und über entsprechende Leitungen wieder mit dem Destillator 10 verbunden ist. Nach einer Verweilzeit von 30 bis 60 Minuten werden die Schnitzel zusammen mit entsprechenden Anteilen anhaftenden Lösungsmittels über die Pumpe 15 abgezogen und in einen Separator 16 gegeben, der zum Beispiel als Filterpresse ausgebildet sein kann und in dem die Schnitzel vom Lösungsmittel getrennt werden. Das separierte Lösungsmittel wird über die Leitung 17 dem Destillator 10 zugeführt und dort regeneriert und von abzuführenden Rückständen getrennt. Die den Separator 16 entnehmbaren Schnitzel werden in einen Trockner 18 gegeben, dem ebenfalls Prozeßwärme W zugeführt wird, um anhaftende Lösungsmittelreste abzudampfen. Die Dämpfe werden aufgefangen und im Kondensator K4, der, wie die Kondensatoren K1, K2 und K3, über eine Wasserzu- und -ableitung verfügt, verflüssigt und den vom Destillator 10 abgehenden Leitungen 11 für regeneriertes Lösungsmittel zugegeben.

Die dem Trockner 18 entnehmbaren Schnitzel können eingeschmolzen und zu Granulat verarbeitet werden, aus dem erneut hochwertige Folien für Verpackungszwecke herstellbar sind.

## Patentansprüche

1. Verfahren zur Aufbereitung von gebrauchten Gegenständen aus Polyolefin zu wiederverwertbarem Rohstoff, insbesondere zur Aufbereitung von gebrauchten Verpackungsfolien aus Polyethylen, wie Schrumpffolien, Säcken und dergleichen, die zu Schnitzeln zerkleinert werden,
dadurch gekennzeichnet,
daß eine vorbestimmte Menge der Schnitzel in ein erstes kochendes Lösungsmittel enthaltendes Lösungsmittelbad (6) zur Extraktion gegeben und etwa 30 Minuten lang intensiv mechanisch durchgerührt werden, daß die Schnitzel aus dem ersten Lösungsmittelbad (6) herausgenommen und in ein zweites Lösungsmittelbad (8) zur Extraktion gegeben und erneut gekocht und intensiv 30 Minuten durchgerührt werden, daß die Schnitzel herausgenommen und in ein drittes Lösungsmittelbad (14) zur Extraktion gegeben und etwa 30 bis 60 Minuten gekocht und intensiv durchgerührt werden, daß die Schnitzel aus dem driten Lösungsmittelbad (14) entnommen und insbesondere durch Auspressen abgetropft werden und daß die abgetropften Schnitzel unter Abdampfung anhaftender Lösungsmittelreste getrocknet, anschließend eingeschmolzen und zu als wiederverwertbarer Rohstoff verwendbarem Granulat ausgeformt werden.

2. Verfahren nach Anspruch 1, dadurch gekennzeichnet, daß die Schnitzel vor der Eingabe in ein Lösungsmittelbad (6) in Wasser gewaschen (Waschstation 2) und anschließend getrocknet werden.

3. Verfahren nach einem der vorhergehenden Ansprüche, dadurch gekennzeichnet, daß als Lösungsmittel eine Flüssigkeit verwendet wird, deren Siedepunkt unter der Erweichungstemperatur des aufzubereitenden Kunststoffes liegt.

4. Verfahren nach einem der Ansprüche 1 bis 3, dadurch gekennzeichnet, daß als Lösungsmittel eine Flüssigkeit verwendet wird, deren Dichte niedriger ist als die Dichte des aufzubereitenden Kunststoffes.

5. Verfahren nach einem der Ansprüche 1 bis 4, dadurch gekennzeichnet, daß als Lösungsmittel eine Flüssigkeit verwendet wird, die thermisch und chemisch im Prozeß stabil ist und gegenüber dem aufzubereitenden Kunststoff chemisch indifferent ist.

6. Verfahren nach einem der Ansprüche 1 bis 5, dadurch gekennzeichnet, daß als Lösungsmittel niedrigsiedende Essigsäureester verwendet werden.

7. Verfahren nach einem der Ansprüche 1 bis 5, dadurch gekennzeichnet, daß als Lösungsmittel niedrigsiedene Alkohole verwendet werden.

8. Verfahren nach Anspruch 6, dadurch gekennzeichnet, daß als Lösungsmittel Ethylacetat verwendet wird.

9. Verfahren nach Anspruch 7, dadurch gekennzeichnet, daß als Lösungsmittel Ethylalkohol verwendet wird.

10. Verfahren nach einem der Ansprüche 1 bis 9, dadurch gekennzeichnet, daß der Lösungsmittelinhalt eines Lösungsmittelbades (6,8,14) nach einer bestimmten Betriebszeit zumindest teilweise gegen frisches Lösungsmittel ausgetauscht wird.

11. Verfahren nach Anspruch 10, dadurch gekennzeichnet, daß der Lösungsmittelaustausch mit der Entnahme der Schnitzel aus dem Lösungsmittelbad (6,8,14) vorgenommen wird.

12. Verfahren nach einem der vorhergehenden Ansprüche, dadurch gekennzeichnet, daß beim Kochen freigesetzte Lösungsmitteldämpfe aufgefangen, kondensiert und das Lösungsmittelkondensat einer Wiederverwendung in den Lösungsmittelbädern (6, 8,14) zugeführt wird.

13. Verfahren nach einem der vorhergehenden Ansprüche, dadurch gekennzeichnet, daß mit Extrakten und Druckfarben beladene Lösungsmittel destilliert und die dabei gewonnene Feststofffraktion entsorgt wird und daß die separierte Lösungsmittelfraktion dem Prozeß wieder zugesetzt wird.

14. Vorrichtung zur Durchführung des Verfahrens nach den Ansprüchen 1 bis 13, gekennzeichnet durch ein Schnitzelwerk (1) für gebrauchte Gegenstände, eine nachgeschaltete Schnitzelwaschstation (2), drei nachfolgende Lösungsmittelbäder (6,8,14) mit integriertem Rührwerk, eine Fördereinrichtung (Pumpen 7,13,15) zum Fördern der Schnitzel durch die Lösungsmittelbäder (6,8,14), Kondensatoren (K1, K2, K3, K4) zur Rückgewinnung von Lösungsmittel aus Lösungsmittelabdämpfen sowie eine Trocknungseinrichtung (18) für die behandelten Schnitzel.

15. Vorrichtung nach Anspruch 14, dadurch gekennzeichnet, daß sie wenigstens einen die beladenen Lösungsmittel in eine Lösungsmittelfraktion und eine Feststofffraktion trennenden Destillator (10) aufweist.

## Claims

1. A method of processing used objects made of polyolefin to produce recyclable raw material, in particular for processing used polyethylene packaging films, such as shrink films, bags and the like, which are reduced to shreds, characterised in that a predetermined quantity of shreds is fed into a first solvent bath (6), containing boiling solvent, for extraction and vigorously mechanically stirred for approximately 30 minutes, in that the shreds are removed from the first solvent bath (6) and fed into a second solvent bath (8) for extraction and once more boiled and vigorously stirred for 30 minutes, in that the shreds are removed and fed into a third solvent bath (14) for extraction and vigorously stirred and boiled for approximately 30 to 60 minutes, in that the shreds are removed from the third solvent bath (14) and drained, in particular by squeezing, and in that the drained shreds are dried by evaporating off adherent solvent residue, then melted down and formed into granules usable as recyclable raw material.

2. A method according to claim 1, characterised in that the shreds are washed in water (washing station 2) and then dried before being fed into a solvent bath (6).

3. A method according to either one of the preceding claims, characterised in that a liquid having a boiling point below the softening temperature of the plastics to be processed is used as a solvent.

4. A method according to any one of claims 1 to 3, characterised in that a liquid having a density lower than the density of the plastics to be processed is used as a solvent.

5. A method according to any one of claims 1 to 4, characterised in that a liquid, thermally and chemically stable in the process and chemically inert to the plastics to be processed, is used as a solvent.

6. A method according to any one of claims 1 to 5, characterised in that low-boiling acetic acid ester is used as a solvent.

7. A method according to any one of claims 1 to 5, characterised in that low-boiling alcohols are used as a solvent.

8. A method according to claim 6, characterised in that ethyl acetate is used as a solvent.

9. A method according to claim 7, characterised in that ethyl alcohol is used as a solvent.

10. A method according to any one of claims 1 to 9, characterised in that the solvent contents of a solvent bath (6, 8, 14) are at least partly exchanged for fresh solvent after a certain operating time.

11. A method according to claim 10, characterised in that the solvent change is carried out on removal of the shreds from the solvent bath (6, 8, 14).

12. A method according to any one of the preceding claims, characterised in that solvent vapours given off during boiling are collected and condensed and the solvent condensate is fed back for reuse in the solvent baths (6, 8, 14).

13. A method according to any one of the preceding claims, characterised in that solvent laden with extracts and printing inks is distilled and the solids fraction thereby recovered is disposed of, and in that the separated solvent fraction is reused in the process.

14. An installation for carrying out the method according to claims 1 to 13, characterised by a shredder (1) for used objects, a subsequently arranged shred-washing station (2), three successive solvent baths (6, 8, 14) having an integral stirring mechanism, a feed device (pumps 7, 13, 15) for feeding the shreds through the solvent baths (6, 8, 14), condensers (K1, K2, K3, K4) for recovering solvent from solvent vapours and a drying device (18) for the treated shreds.

15. An installation according to claim 14, characterised in that it comprises at least one still (10) separating the laden solvent into a solvent fraction and a solids fraction.

## Revendications

1. Procédé de préparation d'objets usagers en polyoléfine, en une matière première recyclable, en particulier pour la préparation de feuilles d'emballage usées en polyéthylène, telles que des feuilles rétractables, des sacs ou analogues, qui sont broyées en copeaux, caractérisé en ce qu'on place pour extraction une quantité prédéfinie des copeaux dans un premier bain de solvant (6) contenant un solvant à ébullition et qu'on le soumet à une agitation mécanique intensive pendant environ 30 minutes ; que l'on retire les copeaux du premier bain de solvant (6) et qu'on les place dans un deuxième bain de solvant (8) pour extraction, avant de les porter de nouveau à ébullition et de les soumettre à une agitation vigoureuse pendant 30 minutes ; que l'on retire les copeaux et qu'on les place dans un troisième bain de solvant (14) pour extraction, et qu'on les porte à ébullition pendant 30 à 60 minutes avant de les soumettre à une vigoureuse agitation ; que l'on retire les copeaux du quatrième bain de solvant (14) et qu'on les égoutte, en particulier par exprimage ; et que les copeaux égouttés sont séchés, les résidus de solvant adhérents étant chassés par évaporation, puis fondus, et transformés en granulés utilisables comme matière première recyclable.

2. Procédé selon la revendication 1, caractérisé en ce que les copeaux sont, avant introduction dans un bain de solvant (6), lavés à l'eau (station de lavage 2), puis séchés.

3. Procédé selon l'une des revendications précédentes, caractérisé en ce qu'on utilise comme solvant un liquide dont le point d'ébullition est inférieur à la température de ramollissement du plastique à préparer.

4. Procédé selon l'une des revendications 1 à 3, caractérisé en ce qu'on utilise comme solvant un liquide dont la masse volumique est inférieure à celle du plastique à préparer.

5. Procédé selon l'une des revendications 1 à 4, caractérisé en ce qu'on utilise comme solvant un liquide qui, lors des opérations, présente une stabilité thermique et chimique, et est chimiquement inerte vis-à-vis du plastique à préparer.

6. Procédé selon l'une des revendications 1 à 5, caractérisé en ce qu'on utilise comme solvant un acétate à bas point d'ébullition.

7. Procédé selon l'une des revendications 1 à 5, caractérisé en ce qu'on utilise comme solvant des alcools à bas point d'ébullition.

8. Procédé selon la revendication 6, caractérisé en ce qu'on utilise comme solvant l'acétate d'éthyle.

9. Procédé selon la revendication 7, caractérisé en ce qu'on utilise comme solvant l'alcool éthylique.

10. Procédé selon l'une des revendications 1 à 9, caractérisé en ce que le solvant contenu dans un bain de solvant (6, 8, 14) est, au bout d'un certain temps d'utilisation, au moins en partie remplacé par du solvant frais.

11. Procédé selon la revendication 10, caractérisé en ce que le remplacement du solvant est réalisé par prélèvement des copeaux du bain de solvant (6, 8, 14).

12. Procédé selon l'une des revendications précédentes, caractérisé en ce que les vapeurs de solvant qui se dégagent lors de l'ébullition sont reprises, condensées, et le condensat de solvant est envoyé à une réutilisation dans les bains de solvant (6, 8, 14).

13. Procédé selon l'une des revendications précédentes, caractérisé en ce qu'on distille les solvants chargés d'extraits et d'encres d'imprimerie, et qu'on rejette la fraction solide obtenue à cette occasion, et que la fraction de solvant ainsi séparée est réintroduite dans le procédé.

14. Dispositif pour mettre en oeuvre le procédé selon les revendications 1 à 13, caractérisé par une machine à fabriquer des copeaux (1), destinée à des objets usagers, par une station de lavage (2) des copeaux, trois bains de solvant successifs (6, 8, 14), avec agitateur intégré, un dispositif de transport (pompes 7, 13, 15) destiné à refouler les copeaux dans les bains de solvant (6, 8, 14), des condenseurs (K1, K2, K3, K4) pour récupérer le solvant des vapeurs s'échappant des solvants, ainsi qu'un dispositif de séchage (18), destiné aux copeaux traités.

15. Dispositif selon la revendication 14, caractérisé en ce qu'il comporte au moins une unité de distillation (10), qui sépare les solvants chargés en une fraction solvant et une fraction solide.
